# EUROPEAN PATENT SPECIFICATION

(11) **EP 1 709 629 B1**
(45) Date of publication and mention of the grant of the patent: **12.12.2007**
(21) Application number: 05702541.3
(22) Date of filing: 03.01.2005
(51) Int. Cl.: G11B 7/004, G11B 7/006, G11B 7/125

(54) **RECORDING APPARATUS AND METHOD FOR OPTIMIZED OVERWRITING**
AUFZEICHNUNGSVORRICHTUNG UND VERFAHREN ZUM OPTIMIERTEN ÜBERSCHREIBEN
APPAREIL D'ENREGISTREMENT ET PROCEDE DE REECRITURE OPTIMISEE

(30) Priority: 19.01.2004 EP 04100139
(43) Date of publication of application: 11.10.2006
(73) Proprietor: Koninklijke Philips Electronics N.V., 5621 BA Eindhoven (NL)
(72) Inventor: KABLAU, Johannes, G., F., NL-5656 AA Eindhoven (NL); VAN DER VLEUTEN, Maarten, NL-5656 AA Eindhoven (NL)
(74) Representative: Uittenbogaard, Frank
(86) International application number: PCT/IB2005/050005
(87) International publication number: WO 2005/071668

(56) References cited:
- US-B1- 6 285 647
- PATENT ABSTRACTS OF JAPAN vol. 015, no. 218 (P-1210), 4 June 1991 (1991-06-04) -& JP 03 059821 A (MITSUBISHI ELECTRIC CORP), 14 March 1991 (1991-03-14)
- PATENT ABSTRACTS OF JAPAN vol. 015, no. 247 (P-1219), 25 June 1991 (1991-06-25) -& JP 03 078126 A (SONY CORP), 3 April 1991 (1991-04-03)
- PATENT ABSTRACTS OF JAPAN vol. 1999, no. 05, 31 May 1999 (1999-05-31) & JP 11 031342 A (HITACHI LTD; HITACHI MAXELL LTD), 2 February 1999 (1999-02-02)

## Description

The present invention relates to a recording apparatus and a corresponding method for recording information in an information layer of a record carrier, said information layer having a phase reversibly changeable between a crystalline phase and an amorphous phase.

In optical recording systems, such as recordable CD, DVD and BD systems, optimization of the write parameters such as write strategy, write power and erase power for each medium and for each write speed is very important. In phase-change rewritable systems, such as CD-RW, it has been observed that the properties of the previously written signal can also significantly influence the overwritten signal quality. Compatibility tests, e.g. test HS-ICOW (Inter Company OverWrite) carried out in CDs21 Solutions TWG2 (http://www.cds21solutions.org), have been carried out where High Speed CD-RW media are initially written by one drive and overwritten by another drive. The results included some poor performing writer/overwriter combinations. Possible causes for this poor performance are differences in write spot parameters as well as differences in write parameters, in particular write power, write speed, erase power and/or write strategy, of the two recorders.

During the development of the standard for Ultra Speed CD-RW (Recordable Compact Disc Systems, Orange Book part III: CD-RW, vol. 3: Ultra Speed v 1.0 and v1.1) a strong relation with write spot shape (e.g. oriented radially or diagonally with respect to the track) was observed: signals that are written with a radially oriented spot tend to be more difficult to overwrite. It is therefore expected that Ultra Speed CD-RW media will be more sensitive to incompatibilities that have been tested for High Speed CD-RW media.

It was noticed that signals that appeared more difficult to overwrite showed a rather high modulation. Indeed, the erasability (the remaining carrier signal after a DC erase) shows a strong dependency on the modulation of the previously written signal.

US 5,541,900 discloses an optical information recording and reproducing apparatus and method for different spot size type media. It includes a spot size recognizing circuit for recognizing a spot size suitable for an information recording medium to be loaded and performs erasing, recording and reproducing to the information recording medium by defocusing or by off-tracking based on the spot size recognized by the spot size recognizing circuit. Therein a spot size suitable for the loaded information recording medium is recognized from the type of tab switch attached to the cartridge of the information recording medium or the management information recorded on the control track of the information recording medium. Based on the recognized spot size either a defocus amount is calculated indicating a difference between a recording face of the information recording medium and a focal point of the recording beam or an off-track amount is calculated indicating a difference between the center of a track formed on the recording face of the information recording medium and the focal point of the recording beam. This solution however needs a separate erase cycle in order to carry out above mentioned corrective actions (defocus or off-track). Therefore, it cannot be implemented on Direct OverWrite (DOW) based systems such as CD-RW, DVD±RW and BD-RE.

JP 03-059821 (cf. the preambles of the independent claims) discloses an optical recording and reproducing device comprising a photodetector and a recording pit width detection circuit which is constituted of a differential computing element and an adder. The pit width in the middle of recording is detected and the recording power of the condensing spot is controlled so that the pit width may be always constant. Thus, the error of a reproducing signal is prevented and an optical recording and reproducing device is obtained where crosstalk does not occur.

It is an object of the present invention to provide a solution for a recording apparatus and method solving the above described incompatibility problem which is also applicable for DOW based systems.

This object is achieved according to the present invention by a recording apparatus as claimed in claim 1, and a corresponding recording method as claimed in claim 11. Preferred embodiments of the invention are defined in the dependent claims.

The invention is based on the recognition that there is an interaction between the characteristics of the previously written signal and the optimum over-write conditions. It has been found that the key factor is mark width of previously written marks. A radially oriented spot at high write power tends to write wide marks. If the overwriting spot has relative low power, possibly a smaller spot and a higher write speed, it will be difficult to completely erase such wide marks. These phenomena become even more critical with higher crystallization speeds. It is thus the general idea of the present invention to analyse the properties of the previously written signal by the overwriting writer and to use the results of this analysis by said writer to optimise the overwrite conditions in order to minimize the jitter.

In particular, it is proposed by the present invention to detect before and/or during overwriting if there are previously written marks and to determine the mark width of said previously written marks. Based on the result of this detection and determination the write parameters are adapted such that previously written marks, irrespective of their widths, are completely erased with high certainty.

Preferred embodiments of the recording apparatus defining the control unit in more detail are defined in claims 2 to 4. One way for the recording apparatus to deal with wide previously written marks is to reduce the write speed. Where crystallization speed is critical, lower write speed (i.e. lower erase speed) will give more time to completely erase the wide previously written mark. Another way to optimize the overwrite process in case of wide previously written marks is to increase the erase power level. Thus, a wider area on the medium will be heated to above the glass temperature and complete erasure of the wide mark will be more likely. Alternatively, the write power level and/or the write strategy may be optimized.

The reduction of the write speed and/or the increase of the erase power level can be controlled dependent on the mark width of a detected previously written mark, preferably such that, for instance, the erase power level continuously increases and/or the write speed continuously decreases with increasing mark width. Alternatively, the reduction of the write speed and/or the increase of the erase power level can be made in steps depending on different levels or thresholds of detected mark widths. Preferably, the write speed and/or the erase power level are controlled such that a previously written mark is completely erased, irrespective of the width of the mark.

Preferred embodiments of the detection unit are defined in claims 5 to 7. One way for the recording apparatus to analyze the previously written signal is to measure the HF-modulation which can be seen as a measure of the mark width. From a threshold power level onwards, modulation increases monotonously with write power and finally saturates. The read-out spot will in general be bigger than the written mark. Hence, the ratio of amorphous and crystalline material is increasing with increasing mark width and modulation will saturate when the mark width reaches the limits of the effective spot on the information layer. Thus, also from the measured HF modulation the mark width of previously written marks can be determined.

Another way is to measure the HF crosstalk by a signal measurement between the written tracks. Since with increasing mark width and modulation in the written tracks the amount of signal detected when tracking on land increases, determination of the mark width is thus possible by measurement of the HF crosstalk.

Still another way is to measure the previously written signal strength during the actual erase procedure, which may be a way to monitor the previous mark width in real time. The easiest method for mark width detection is the modulation measurement method because no land-groove switching and no high speed sampling during writing are required.

The invention will now be explained in more detail with reference to the drawings in which:
Fig. 1 shows different types of spot shapes of a radiation beam used for writing marks,
Fig. 2 shows different mark widths written by a radiation beam having a spot shape shown in Fig. 1,
Fig. 3 shows a block diagram of a recording apparatus according to the present invention,
Figs. 4a, 4b and 4c show a data signal and control signals according to the invention for controlling the power level of the radiation beam during recording, and
Fig. 5 shows a flow chart of a start-up write sequence with write speed optimization based on the previously written signal characteristics.

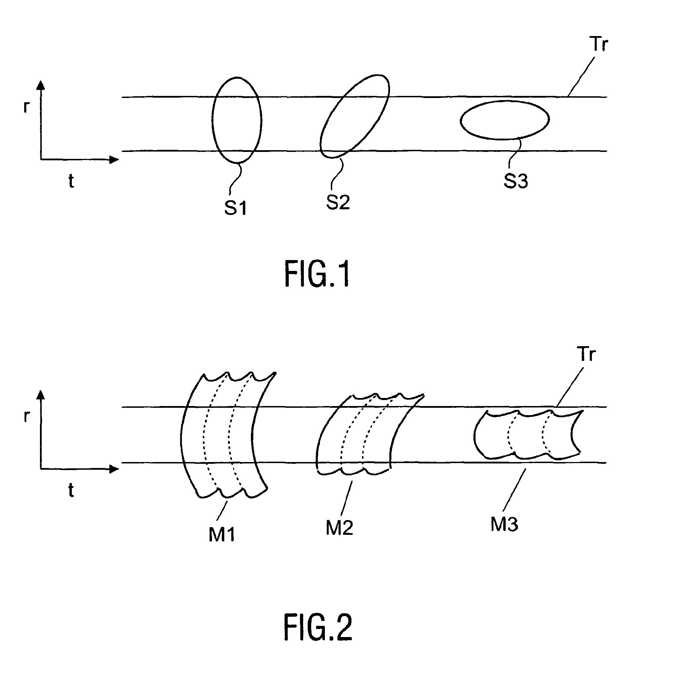

Fig. 1 shows different spot shapes of recording beams used for recording marks in the information layer of an optical record carrier of the phase-change type along the track Tr oriented along the tangential direction t and perpendicular to the radial direction r of an optical record carrier. A radially oriented spot S1 having the shape of an ellipse with its long axis perpendicular to the tangential direction t, a diagonally oriented spot S2 having its long axis 45 degrees with respect to the tangential direction t and a tangentially oriented spot S3 having its long axis parallel to the tangential direction t are shown. The shapes of recorded marks M1, M2, M3 (having a length of 4T) written by a radiation beam having such different types of spot shapes are shown in Fig. 2.

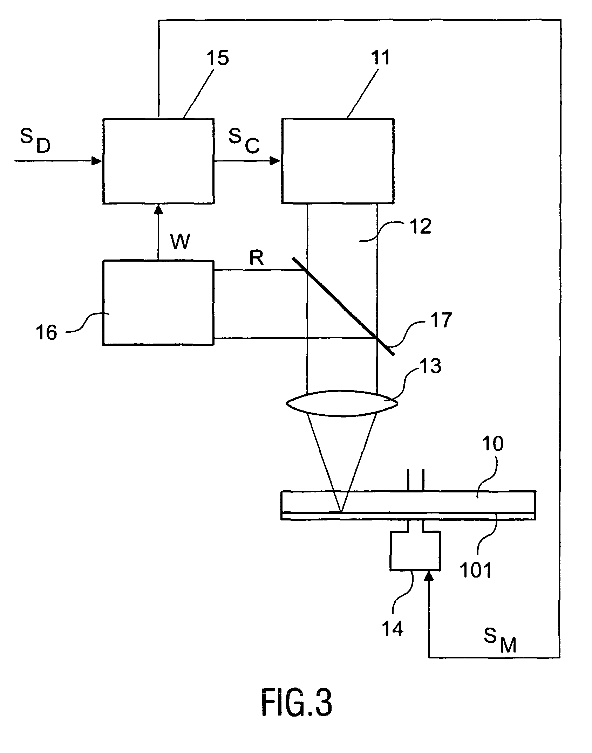

Fig. 3 shows an embodiment of the recording device according to the present invention for recording marks in an information layer 101 of a disc-shaped record carrier 10. The information layer 101 is of the so-called phase-change type, that is, it has a phase reversibly changeable between a crystal phase and an amorphous phase. The record carrier is rotated around its center by a motor 14. A radiation beam 12 is generated by a radiation source 11, such as for example a laser light source, and focused onto the information layer 101 by a lens 13.

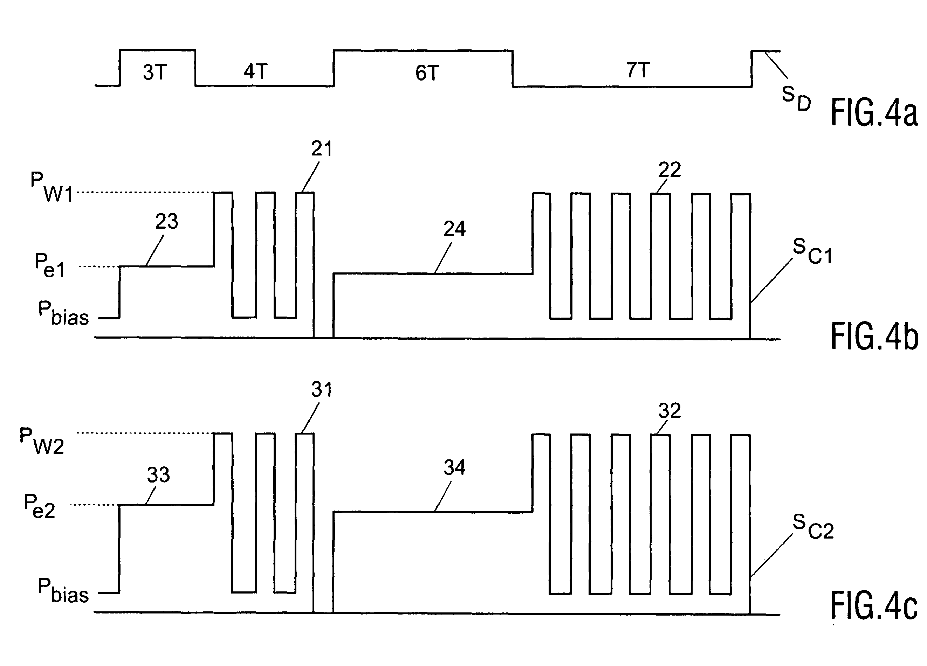

The power of the radiation beam 12 is controlled by a control signal S_{C} provided by a control unit 15, where it is assumed that the power of the radiation beam 12 is proportional to the corresponding level of the control signal S_{C}. Examples of such a control signal S_{C} are shown in Figs. 4b and 4c. The control unit 15 converts a digital data signal S_{D} representing the length of a mark to be recorded in the information layer 101 of the record carrier 10 into a corresponding control signal S_{C}. This conversion is based on a so-called write strategy. An examples of such a digital data signals S_{D} is also shown in Fig. 4a.

The patterns of the pulses and the gaps between the pulses in a control signal S_{C} are controlled by the control unit 15 based on mark width information W determined by the detection unit 16. Additionally, the motor control signal S_{M}, setting the rotational motor speed is also controlled by the control unit 15 based on mark width information W determined by the detection unit 16. The detection unit 16 detects if there are previously written marks present in the track of the information layer in which new information shall be recorded. Further, if there are previously written marks present, then also the mark width of such previously written marks is detected.

In a preferred embodiment, the detection unit 16 is adapted for measuring the HF modulation, particularly in the DC coupled HF-signal as (A-B)/A with A the top level of a long (e.g. 111 in CD; 114 in DVD) space and B the bottom level of a long mark.

In another preferred embodiment, the detection unit 16 is adapted for measuring HF crosstalk between the written tracks. HF crosstalk is preferably measured as the ratio of HF signal amplitudes tracking on the land and in the groove of the information layer.

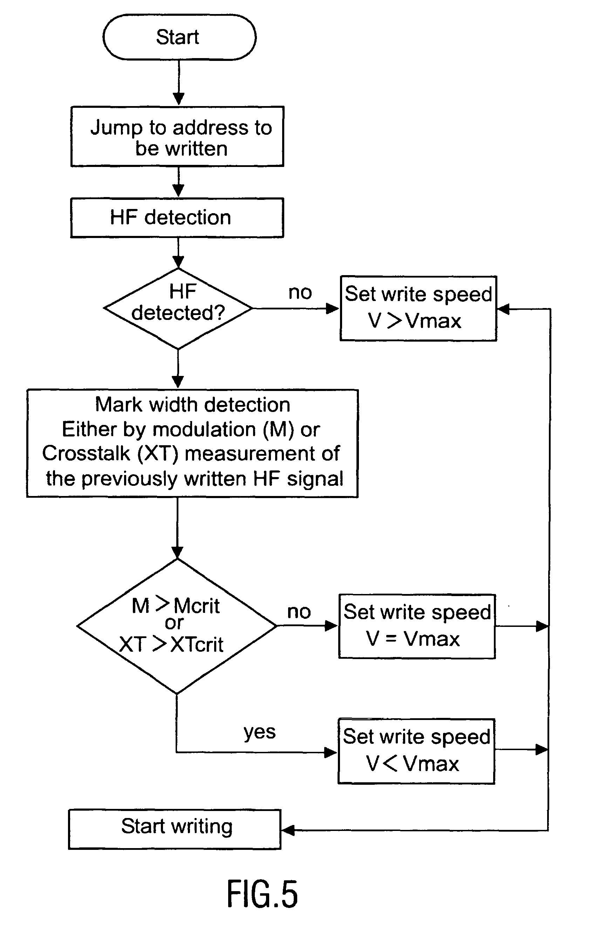

Fig. 5 shows a flow chart of a start up write sequence of the latter two embodiment where write speed is optimized based on the previously written modulation or crosstalk. This can be done each time a writing action is started.

In still a further embodiment shown in Fig. 3 the detection unit 16 is provided for (almost) real time measurement by making use of reflected light outcoupled by a beam splitter 17 during writing. This outcoupled signal R, modulated by the write pulse, includes information about the reflectivity state of the information layer before and during the overwriting process. Accurate and fast sampling of the reflected light is thus required to enable such a real time measurement of the signal amplitude during recording.

Based on the mark width information W the control unit 15 adapts the control signal S_{C}. In particular, the patterns of the pulses and the gaps between the pulses in the control signal S_{C}, the write speed and the power levels are set. Preferably, with the increasing mark width the overwrite speed is reduced and/or the erase power level of erase pulses is increased in order to ensure that previously written marks are completely erased when new information is recorded.

An example of a digital data signal S_{D} to be recorded is shown in Fig. 4a. Examples of control signals S_{C} relating to the digital data signal S_{D} are shown in Figs. 4b and 4c. Fig. 4b shows a first control signal S_{C1} used when no marks or marks of "normal" width are previously recorded in the information layer, and Fig. 4c shows a second control signal S_{C2} used when wide marks are previously recorded in the information layer. The digital data signal S_{D} is shown as a function of time, the value of the signal representing information to be recorded. In the example the data signal S_{D} subsequently comprises a 3T space, a 4T mark, a 6T space and a 7T mark, T representing the period of a reference/data clock, also called the channel clock period.

The data is written in an optical rewritable record carrier having an information layer, which information layer has a phase reversibly changeable between a crystalline phase and an amorphous phase. The marks representing the data are written along a track in the information layer by irradiating it with a pulsed radiation beam in order to write the marks. Previously written marks representing the data are erased along a track in the information layer by irradiating it with a CW (Continuous Wave) radiation beam. In case of Direct OverWrite systems, during rewriting an erase level is applied in between write pulses to erase the previously written marks. The control signals shown in Figs. 4b and 4c use an N-1 write strategy, i.e. the number of write pulses for writing a mark having a time length of NT equals N-1, i.e. three write pulses 21 are applied for writing the 4T mark and six write pulses 22 are applied for writing the 7T mark, all write pulses having a constant write power level P_{w}. Previously written marks are erased during writing the spaces by applying constant erase levels 23, 24 Pₑ₁.

In the second control signal S_{C2} used when there have been marks detected previously written and having a large width is shown. As can be seen, in this embodiment the erase power level Pₑ₂ of the erase pulses 33, 34 are increased compared to the power Pₑ₁ of the first control signal S_{C1}. At the same time, the writing speed may be reduced, such that the clock period T is increased. Thus, it can be ensured that the previously written marks are completely erased.

The present invention is not limited to the embodiments shown in the figures and described above. Particularly, other write strategies (e.g. 2T type write strategies) can be applied as well, e.g. the use of a pulsed radiation beam is not necessarily required. Further, there are different ways of evaluating measured mark widths and of optimizing the write strategy which shall all be covered by the present invention.

Last, although the invention has been explained with reference to optical disks, the invention could be applied to other types of information carriers, like for example magneto-optical disks.

## Claims

1. Recording apparatus for recording information in an information layer (101) of a record carrier (10) by irradiating the information layer (101) by means of a radiation beam (12), comprising:
- a radiation source (11) for emitting said radiation beam for writing, erasing and/or reading information,
- a control unit (15) operative for controlling the power of said radiation beam, **characterized by** a detection unit (16) for detecting previously written marks in the track of said information layer, in which the information shall be recorded, and for determining the mark width of detected previously written marks to be overwritten,
wherein said control unit (15) is adapted for controlling write parameters for writing the information based on the determined mark width of detected previously written marks to be overwritten.

2. Recording apparatus as claimed in claim 1, wherein said control unit (15) is adapted for reducing the write speed and/or for increasing the erase power level of said radiation beam in case of increased widths of detected previously written marks.

3. Recording apparatus as claimed in claim 1, wherein said control unit (15) is adapted for reducing the write speed and/or for increasing the erase power level of said radiation beam if the width of a detected previously written mark exceeds a predetermined threshold.

4. Recording apparatus as claimed in claim 2 or 3, wherein said control unit (15) is adapted for setting the write speed and/or the erase power level of said radiation beam such that a previously written mark is completely erased.

5. Recording apparatus as claimed in claim 1, wherein said detection unit (16) is adapted for measuring of the HF modulation of a previously written mark.

6. Recording apparatus as claimed in claim 1, wherein said detection unit (16) is adapted for measuring the HF crosstalk between adjacent tracks.

7. Recording apparatus as claimed in claim 1, wherein said detection unit (16) is adapted for measuring the signal strength of a previously written signal during the writing of information.

8. Recording apparatus as claimed in claim 1, wherein said control unit (15) is adapted for gradually reducing the write speed and/or for gradually increasing the erase power level of said radiation beam if the width of a detected previously written mark exceeds a predetermined threshold of multiple threshold levels.

9. Recording apparatus as claimed in claim 1, wherein said control unit (15) is adapted for setting the write speed based on the previously written HF modulation or HF crosstalk, in particular when a recording action is started.

10. Recording apparatus as claimed in claim 1, adapted for recording information in an information layer (101) having a phase reversibly changeable between a crystalline phase and an amorphous phase.

11. Recording method, in particular for use in a recording apparatus as claimed in claim 1, for recording information in an information layer (101) of a record carrier (10) by irradiating the information layer (101) by means of a radiation beam (12), comprising the steps of :
- emitting a radiation beam for writing information in said information layer,
- controlling the power of said radiation beam and the write parameters for writing information,
**characterized by** the further steps of
- detecting previously written marks to be overwritten in the track of said information layer, in which the information shall be recorded,
- determining the mark width of detected previously written marks,
wherein in said step of controlling the power of said radiation beam and the write parameters for writing said information is controlled based on the determined mark width of detected previously written marks to be overwritten.

## Patentansprüche

1. Aufzeichnungsgerät zum Aufzeichnen von Informationen in einer Informationsschicht (101) eines Aufzeichnungsträgers (10) durch Bestrahlen der Informationsschicht (101) mittels eines Strahls (12), welches umfasst:
- eine Strahlungsquelle (11) zum Aussenden des Strahls zum Schreiben, Löschen und/oder Lesen von Informationen,
- eine Steuereinheit (15), welche die Steuerung der Leistung des Strahls bewirkt, **gekennzeichnet durch** eine Detektionseinheit (16) zum Detektieren früher geschriebener Markierungen in der Spur der Informationsschicht, in welcher die Informationen aufgezeichnet werden sollen, und zum Bestimmen der Markierungsbreite detektierter früher geschriebener Markierungen, die zu überschreiben sind,
wobei die Steuereinheit (15) geeignet ist, Schreibparameter zum Schreiben der Informationen auf der Basis der ermittelten Markierungsbreite von detektierten früher geschriebenen Markierungen, die zu überschreiben sind, zu steuern.

2. Aufzeichnungsgerät nach Anspruch 1, wobei die Steuereinheit (15) geeignet ist, im Falle von erhöhten Breiten detektierter früher geschriebener Markierungen die Schreibgeschwindigkeit zu verringern und/oder den Löschleistungspegel des Strahls zu erhöhen.

3. Aufzeichnungsgerät nach Anspruch 1, wobei die Steuereinheit (15) geeignet ist, die Schreibgeschwindigkeit zu verringern und/oder den Löschleistungspegel des Strahls zu erhöhen, falls die Breite einer detektierten früher geschriebenen Markierung einen vorgegebenen Schwellwert übersteigt.

4. Aufzeichnungsgerät nach Anspruch 2 oder 3, wobei die Steuereinheit (15) geeignet ist, die Schreibgeschwindigkeit und/oder den Löschleistungspegel des Strahls derart einzustellen, dass eine früher geschriebene Markierung vollständig gelöscht wird.

5. Aufzeichnungsgerät nach Anspruch 1, wobei die Detektionseinheit (16) geeignet ist, die HF-Modulation einer früher geschriebenen Markierung zu messen.

6. Aufzeichnungsgerät nach Anspruch 1, wobei die Detektionseinheit (16) geeignet ist, das HF-Übersprechen zwischen benachbarten Spuren zu messen.

7. Aufzeichnungsgerät nach Anspruch 1, wobei die Detektionseinheit (16) geeignet ist, die Signalstärke eines früher geschriebenen Signals während des Schreibens von Informationen zu messen.

8. Aufzeichnungsgerät nach Anspruch 1, wobei die Steuereinheit (15) geeignet ist, die Schreibgeschwindigkeit allmählich zu verringern und/oder den Löschleistungspegel des Strahls allmählich zu erhöhen, falls die Breite einer detektierten früher geschriebenen Markierung einen vorgegebenen Schwellwert von mehreren Schwellwertpegeln übersteigt.

9. Aufzeichnungsgerät nach Anspruch 1, wobei die Steuereinheit (15) geeignet ist, die Schreibgeschwindigkeit auf der Basis der früher geschriebenen HF-Modulation oder des HF-Übersprechens einzustellen, insbesondere wenn ein Aufzeichnungsvorgang gestartet wird.

10. Aufzeichnungsgerät nach Anspruch 1, das für das Aufzeichnen von Informationen in einer Informationsschicht (101) geeignet ist, die eine Phase hat, die umkehrbar zwischen einer kristallinen Phase und einer amorphen Phase veränderlich ist.

11. Aufzeichnungsverfahren, insbesondere zur Verwendung in einem Aufzeichnungsgerät nach Anspruch 1, zum Aufzeichnen von Informationen in einer Informationsschicht (101) eines Aufzeichnungsträgers (10) durch Bestrahlen der Informationsschicht (101) mittels eines Strahls (12), welches die folgenden Schritte umfasst:
- Aussenden eines Strahls zum Schreiben von Informationen in der Informationsschicht,
- Steuern der Leistung des Strahls und der Schreibparameter für das Schreiben von Informationen,
**gekennzeichnet durch** die folgenden weiteren Schritte:
- Detektieren früher geschriebener Markierungen, die zu überschreiben sind, in der Spur der Informationsschicht, in welcher die Informationen aufgezeichnet werden sollen,
- Bestimmen der Markierungsbreite detektierter früher geschriebener Markierungen, wobei in dem Schritt des Steuerns der Leistung des Strahls und der Schreibparameter für das Schreiben der Informationen auf der Basis der ermittelten Markierungsbreite von detektierten früher geschriebenen Markierungen, die zu überschreiben sind, gesteuert wird.

## Revendications

1. Appareil d'enregistrement pour enregistrer des informations dans une couche d'informations (101) d'un support d'enregistrement (10) par irradiation de la couche d'informations à l'aide d'un faisceau de radiation (12) comprenant :
une source de radiation (11) pour émettre ledit faisceau de radiation pour écrire, effacer et/ou lire des informations,
une unité de commande (15) opératoire pour commander la puissance dudit faisceau de radiation, **caractérisé par** une unité de détection (16) pour détecter des marques écrites précédemment dans la piste de ladite couche d'information, dans laquelle les informations vont être enregistrées, et pour déterminer la largeur de marque des marques détectées écrites précédemment et devant être réécrites,
dans lequel ladite unité de commande (15) est adaptée pour commander les paramètres d'écriture pour écrire les informations sur base de la largeur de marque déterminée des marques détectées écrites précédemment et devant être réécrites.

2. Appareil d'enregistrement selon la revendication 1, dans lequel ladite unité de commande (15) est adaptée pour réduire la vitesse d'écriture et/ou augmenter le niveau de puissance d'effacement dudit faisceau de radiation en cas d'augmentation des largeurs des marques détectées écrites précédemment.

3. Appareil d'enregistrement selon la revendication 1, dans lequel ladite unité de commande (15) est adaptée pour réduire la vitesse d'écriture et/ou augmenter le niveau de puissance d'effacement dudit faisceau de radiation si la largeur d'une marque détectée écrite précédemment dépasse un seuil prédéterminé.

4. Appareil d'enregistrement selon la revendication 2 ou 3, dans lequel ladite unité de commande (15) est adaptée pour établir la vitesse d'écriture et/ou le niveau de puissance d'effacement dudit faisceau de radiation, de sorte qu'une marque écrite précédemment soit complètement effacée.

5. Appareil d'enregistrement selon la revendication 1, dans lequel ladite unité de détection (16) est adaptée pour mesurer la modulation HF d'une marque écrite précédemment.

6. Appareil d'enregistrement selon la revendication 1, dans lequel ladite unité de détection (16) est adaptée pour mesurer la diaphonie HF entre des pistes adjacentes.

7. Appareil d'enregistrement selon la revendication 1, dans lequel ladite unité de détection (16) est adaptée pour mesurer l'intensité de signal d'un signal écrit précédemment durant l'écriture des informations.

8. Appareil d'enregistrement selon la revendication 1, dans lequel ladite unité de commande (15) est adaptée pour réduire progressivement la vitesse d'écriture et/ou pour augmenter progressivement le niveau de puissance d'effacement dudit faisceau de radiation si la largeur d'une marque détectée écrite précédemment dépasse un seuil prédéterminé parmi de multiples niveaux de seuil.

9. Appareil d'enregistrement selon la revendication 1, dans lequel ladite unité de commande (15) est adaptée pour établir la vitesse d'écriture sur base de modulation HF ou de diaphonie HF écrites précédemment, en particulier lorsqu'une action d'enregistrement est démarrée.

10. Appareil d'enregistrement selon la revendication 1, adapté pour enregistrer des informations dans une couche d'informations (101) ayant une phase changeant de manière réversible entre une phase cristalline et une phase amorphe.

11. Procédé d'enregistrement, en particulier pour être utilisé dans un appareil d'enregistrement selon la revendication 1, pour enregistrer des informations dans une couche d'informations (101) d'un support d'enregistrement (10) par irradiation de la couche d'informations (101) à l'aide d'un faisceau de radiation (12), comprenant les étapes suivantes :
émission d'un faisceau de radiation pour écrire des informations dans ladite couche d'informations,
commande de la puissance dudit faisceau de radiation et des paramètres d'écriture pour écrire des informations,
**caractérisé par** les étapes supplémentaires suivantes:
détection des marques écrites précédemment devant être réécrites dans la piste de ladite couche d'informations, dans laquelle les informations vont être enregistrées,
détermination de la largeur de marque des marques écrites détectées précédemment, dans laquelle, dans ladite étape commandant la puissance dudit faisceau de radiation et les paramètres d'écriture, pour écrire lesdites informations, sont commandés sur base de la largeur de marque déterminée des marques écrites détectées précédemment devant être réécrites.
